# EUROPÄISCHE PATENTSCHRIFT

(11) **EP 2 099 302 B1**
(45) Veröffentlichungstag und Bekanntmachung des Hinweises auf die Patenterteilung: **01.05.2013**
(21) Anmeldenummer: 07857361.5
(22) Anmeldetag: 11.12.2007
(51) Int. Cl.: A01N 55/00, C08K 5/544, C08K 13/02, D06M 13/513, A01P 1/00, A01N 59/00, A01N 59/16, A01N 59/06

(54) **ANTIMIKROBIELLE ZUSAMMENSETZUNG ZUR AUSRÜSTUNG VON TEXTILIEN**
ANTIMICROBIAL COMPOSITION FOR FINISHING TEXTILES
COMPOSITION ANTIMICROBIENNE POUR L'APPRÊT DE TEXTILES

(30) Priorität: 12.12.2006 DE 102006058956
(43) Veröffentlichungstag der Anmeldung: 16.09.2009
(73) Patentinhaber: Sanitized AG, 3400 Burgdorf (CH)
(72) Erfinder: BENDER, Walter, 4310 Rheinfelden (CH); MARTE, Oliver, 9630 Wattwil (CH); MARTE, Walter, 9631 Ulisbach (CH)
(74) Vertreter: Jacobi, Markus Alexander
(86) Internationale Anmeldenummer: PCT/EP2007/063665
(87) Internationale Veröffentlichungsnummer: WO 2008/071681

(56) Entgegenhaltungen:
- WO-A-00/78770
- WO-A-2005/069785
- US-A- 4 615 882

## Beschreibung

Die vorliegende Erfindung betrifft eine antimikrobielle Zusammensetzung zum Ausrüsten von Textilien, Garnen und Fasern, enthaltend eine organische antimikrobielle Komponente (K) und mindestens eine Metallsalz-Komponente (M) sowie ggf. Lösungsmittel und weitere Hilfskomponenten.

Im Stand der Technik werden verschiedene Verfahren zur Ausrüstung von Textilien mit antimikrobiellen Komponenten beschrieben, die z. B. den Tragekomfort von Kleidungsstücken erhöhen sollen. Die meisten Textilien enthalten mikrobiologisch abbaubares Material. Sie sind häufig entweder vollständig oder teilweise aus mikrobiologisch abbaubaren Fasern hergestellt, beispielsweise aus Baumwolle, Cellulose (z. B. Viskose und Tencel), Hanf, Flachs, Leinen, Seide, Acetat oder Wolle. Auch Textilien aus synthetischen Fasern wie z.B. Polyester, Polyacrylnitril, Polyamid (z. B. Aramid, Nomex, Kevlar, Polyamid 6, Polyamid 6.6) oder Polypropylen, werden regelmäßig von Bakterien besiedelt, insbesondere dann, wenn sie mit Ausrüstungsmitteln, wie z.B. Weichmachern, Hydrophobierungsmitteln, Antistatika und/oder Bindern versehen werden oder während des Gebrauchs mikrobiologisch abbaubares Material aufnehmen, wie z.B. organische Substanzen aus der Umwelt.

Durch den Befall der Textilien mit Mikroorganismen wie Bakterien können nicht nur die Optik, sondern auch die Gebrauchseigenschaften der Textilien negativ verändert werden.

Die organischen Bestandteile von apokrinem Schweiß, einer beim Austritt aus den Drüsen praktisch geruchlosen Flüssigkeit, werden von Bakterien der Hautflora zersetzt. Dies geschicht auch auf mit textilen Materialen, die mit Schweiß in Kontakt kommen.
Die aus dem Abbau von z. B. langkettigen Fettsäuren oder Hormonen, wie beispielsweise Testosteron, entstehenden kleinen Moleküle wie Buttersäure oder Ameisensäure führen zu einem unerwünschten Schweißgeruch. Dabei sind Textilien aus Synthesefasern wie z. B. Polyester oder Polyamid für einen bakteriellen Abbau von Schweiß besonders anfällig und können deshalb nach besonders kurzer Zeit den typischen, unangenehmen Geruch von zersetztem Schweiß aufweisen.

Die Besiedlung durch Mikroorganismen und der Abbau von Schweiß lassen sich jedoch bekanntermaßen durch eine antimikrobielle Ausrüstung von Textilien verhindern. Für die antibakterielle Ausrüstung von Textilien werden im Stand der Technik z. B. Substanzen wie Triclosan (ein Phenoxy-Phenol-Derivat) oder in jüngerer Zeit auch Zubereitungen auf der Basis von Silberionen eingesetzt. Technisch gesehen, haben Produkte mit diesen Substanzen jedoch ihre engen Grenzen. Nachteilig sind beispielsweise der Dampfdruck von Triclosan auf dem Spannrahmen und die erreichbare Waschbeständigkeit bei den bislang verfügbaren Silberprodukten, insbesondere wenn kein polymerer Binder appliziert wird. Die Vermeidung von Bindemitteln ist jedoch oftmals notwendig, da polymere Bindemittel den Griff von Textilien verändern, was als Effekt nicht immer erwünscht ist.

Es gibt somit keine Zusammensetzung beziehungsweise keinen einzelnen Wirkstoff, der für alle antibakteriellen Ausrüstungen gleichermassen geeignet ist. Die Aufgabe einer dauerhaften antimikrobiellen bzw. antibakteriellen Ausrüstung, insbesondere auf Textilien, die ganz oder teilweise aus Synthesefasern wie Polyamid oder Polyester bestehen, ist bislang unzureichend gelöst.

Gerade bei empfindlichen Textilien ist auf der anderen Seite das Bedürfnis nach einer antimikrobiellen Ausrüstung sehr groß, da solche Textilien oft für Anwendungen im Sport- und Freizeitbereich eingesetzt werden, wo die textilen Eigenschaften dieser Fasern ganz besonders erwünscht sind, auf der anderen Seiten aber gerade bei sportlichen Betätigungen die Belastung der Textilien durch Schweiß sehr gross ist. Nahrung, Wärme und Feuchtigkeit, die Wachstumsgrundlagen von Bakterien sind, treten zudem gerade bei Sporttextilien auf.

Neben Bekleidungstextilien gibt es zunehmend Anwendungen von Synthesefasern wie Polyamid und insbesondere Polyester im Bereich der Heimtextilien, wo solche Fasern oft als Mikrofasern eingesetzt werden. Beispiele für solche Anwendungen von Synthesefasern sind Mikrofasertücher für die Reinigung, Frottee, oder auch Polsterbezugsstoffe.

Neben den bereits genannten antibakteriell wirkenden Substanzen ist der Einsatz von quaternären Ammonium-Verbindungen (so genannten "Quats") für die antibakterielle Ausrüstung von Textilien beschrieben. Substanzen dieser Klasse decken oftmals ein breites Keimspektrum mit hervorragender Wirkung ab. So wird in Karl Heinz Wallhäusser, Praxis der Sterilisation Desinfektion - Konservierung, 5. Auflage, Georg Thieme Verlag Stuttgart, New York 1995, Seite 586 ff. diese Substanzklasse im Detail beschrieben. Seit langem ist bekannt, dass quaternäre Ammoniumverbindungen dann bakterizid wirken, wenn mindestens einer der vier Substituenten am quaternären Stickstoff eine Kettenlänge von 8 bis 18 C-Atomen aufweist, vorzugsweise eine solche von 12 bis 16 C-Atomen.

Die anderen Substituenten können z. B. gerade oder verzweigte Alkylreste sein oder Reste mit Heteroatomen oder Reste mit Aromaten. Häufig werden auch ein oder mehrere Benzylreste an den quaternäre Stickstoff im Molekül gebunden. Gute Ergebnisse konnten auch mit quaternäre Ammoniumverbindungen mit zwei Methylgruppen, einer n-Alkylgruppe mit zwischen 10 bis 18 C-Atomen und einer 3-Trimethoxysilylpropylgruppe gefunden werden.

Quaternäre Ammoniumverbindungen haben die positive Eigenschaft, dass sie in Wasser gut löslich sind. Diese Eigenschaft kommt der wässrigen Applikation im industriellen Ausrüstungsprozess in der Textilindustrie sehr entgegen. Gleichzeitig führ diese Eigenschaft aber dazu, dass solche Verbindungen schnell von den Textilien herunter gewaschen werden, da die Haftung an Textilien primär mittels Van-der-Waals-Kräften und ggf. noch mit Ionenpaarbindungen möglich ist.

Um die Waschbeständigkeit auf Textilien zu verbessern, wurden die Vorstufen von den Quats, nämlich tertiäre Amine mit 3-Chlorpropyltrimethoxysilan quaternisiert. Wird diese Quarternisierung im Lösungsmittel Methanol durchgerührt, so ist diese Umsetzung schon seit Jahrzehnten bekannt.

Die Quarternisierung kann auch mit dem Octadecyldimethylamin in Methanol erfolgen und führt dann zu einem bezüglich antibakterieller Wirkung suboptimalen Produkt. Der Hauptnachteil dieses Produktes ist das Lösungsmittel Methanol, das wegen seiner Eigenschaften in der Textilindustrie zu massiven Einschränkungen in der Anwendung führt.

Auf dem Markt gibt es z. B. Produkte mit einer Trimethoxysilylpropylgruppe am quarternären Stickstoff, wobei die Produkte aus der Umsetzung mit Didecylmethylamin beziehungsweise mit Tetradecyldimethylamin bezichungsweise aus der Umsetzung mit Octadecyldimethylamin erhalten werden können. Die lösungsmittelfreie Quarternisierung von Aminen wird z. B. in DE-A 199 28 127 beschrieben.

Textilien aus Polyester wurden bislang bereits mit einer Formulierung mit dem Wirkstoff Dimethyl-tetradecyl-[3-(trimethoxysilyl)]-propyl-ammoniumchlorid, die als Sanitized T 99-19 auf dem Markt ist, ausgerüstet. Dabei liegt eine 50%ige Lösung des technischen Wirkstoffes (Salzes) in Methyltriglycol vor. Methyltriglycol hat die chemische Formel CH₃(OCH₂CH₂)₃-OH.

Das ebenfalls bekannte Produkt Aegis AEM 5772/5 ist eine rund 5%ige wässrige Lösung des Wirkstoffs Dimethyl-octadecyl-[3-(trimethoxysilyl)-propyl]-ammoniumchlorid. Alternativ ist auch der höher konzentrierte Wirkstoff gelöst in Methylalkohol erhältlich.

Bei der Herstellung der Applikationsbäder entstehen sehr schnell die Hydrolyseprodukte der Wirkstoffe, die zur Oligomerisierung neigen, sofern sie nicht bereits in der Handelsform als überwiegend hydrolysiertes Produkt vorliegen.

Die Ausrüstungen der Textilien erfolgten vorzugsweise im Foulardverfahren.

Werden diese Textilien mittels eines Count-Tests nach dem Verfahren JIS L 1902:2002 oder nach ASTM E 2149 geprüft, so zeigen sie eine hervorragende antibakterielle Wirkung. Diese bekannten Produkte finden beispielsweise auf Textilien aus Cellulosefasern Reaktionspartner mit denen sie chemisch reagieren können und eine stabile kovalente Bindung eingehen können. Auf solchen Textilien ist die antimikrobielle Ausrüstung dauerhaft. Auf Polyester oder Polyamid hingegen gibt es zu wenige Reaktionspartner, um solche Produkte dauerhaft zu binden.

Werden diese Textilien gewaschen, so verschwindet diese antibakterielle Wirkung meist schon nach wenigen Waschzyklen weitgehend bis vollständig.

Es stellte sich daher die Aufgabe, eine technische Lösung zu finden, wie quarternäre Ammoniumverbindungen mit einer Trimethoxysilylalkylgruppe als Rest an der quaternären Ammoniumgruppe (oder die Hydrolyseformen davon) auf Textilien, die aus Synthesefasern, wie z. B. Polyamid oder Polyester hergestellt worden sind, möglichst waschfest appliziert werden können. Es besteht ein Bedarf an einer Zusammensetzung, die eine dauerhafte antimikrobielle Ausrüstung ermöglicht und einfach und kostengünstig angewendet werden kann.

Die oben genannten Aufgaben werden gelöst durch eine Zusammensetzung enthaltend eine organische antimikrobielle Komponente (K) und mindestens eine Metallsalz-Komponente (M) sowie ggf. ein Lösungsmittel (L) und ggf. weitere Hilfskomponenten. Dabei enthalten die Zusammensetzungen als organische Komponente (K) mindestens eine Verbindung der allgemeinen Formel (I), 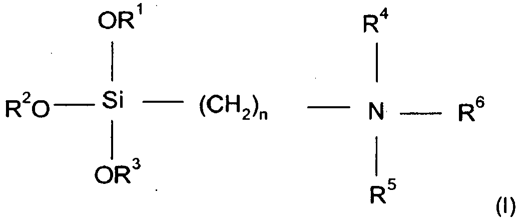 wobei die Reste unabhängig voneinander folgende Bedeutungen haben,
R¹ bedeutet einen verzweigten oder nicht verzweigten Alkylrest mit 1 bis 12 C-Atomen, wobei der Alkylrest auch substituiert sein kann durch eine Gruppe H-(CH₂)ₘ-O)_{q}, wobei m eine ganze Zahl von 0 bis 4 sein kann und q eine ganze Zahl von 1 bis 6 ist;
R² bedeutet einen verzweigten oder nicht verzweigten Alkylrest mit 1 bis 12 C-Atomen, wobei der Alkylrest auch substituiert sein kann durch eine Gruppe H-((CH₂)ₘ₋O)_{q}, wobei m eine ganze Zahl von 0 bis 4 sein kann und q eine ganze Zahl von 1 bis 6 ist;
R³ bedeutet einen verzweigten oder nicht verzweigten Alkylrest mit 1 bis 12 C-Atomen, wobei der Alkylrest auch substituiert sein kann durch eine Gruppe H-((CH₂)ₘ-O)_{q}, wobei m eine ganze Zahl von 0 bis 4 sein kann und q eine ganze Zahl von 1 bis 6 ist;
R⁴ bedeutet einen verzweigten oder nicht verzweigten Alkylrest mit 1 bis 18 C-Atomen, einen Cyclo-alkylrest mit 3 bis 7 C-Atomen, einen Phenylrest, einen gegebenenfalls durch ein oder zwei Halogenatome substituierten Benzylrest (z. B. Dichlorbenzyl) oder einen Heteroarylrest bedeutet;
R⁵ bedeutet einen verzweigten oder nicht verzweigten Alkylrest mit 1 bis 18 C-Atomen, einen Cyclo-alkylrest mit 3 bis 7 C-Atomen, einen Phenylrest, einen gegebenenfalls durch ein oder zwei Halogenatome substituierten Benzylrest oder einen Heteroarylrest bedeutet;
R⁶ bedeutet einen verzweigten oder nicht verzweigten Alkylrest mit 8 bis 18 C-Atomen;
n bedeutet eine ganze Zahl von 1 bis 6, insbesondere von 1 bis 4;
und wobei sie als Metallsalz-Komponente (M) mindestens ein Salz eines zwei- bis fünfwertigen Metalls enthält.

Bei der organischen Komponente (K) handelt es sich um Silicium-organische Ammoniumverbindungen, die als Ausgleich zur positiven Ladung der Ammoniumgruppe ein beliebiges Anion aufweisen können. Beispiele für Anionen sind Halogenide (wie F⁻, Cl⁻, Br⁻), Sulfate, Carbonate, organische Anionen (wie Acetat) und andere.

Unter einem Alkylrest werden z. B. ein Methyl-, Ethyl-, Propyl-, Butyl-, Hexyl-, Heptyl- oder Octylrest verstanden, aber auch z.B. die langkettigen Reste wie Octyl-, Decyl-, Dodecyl, Tetradecyl, Hexadecyl- oder der Octadecylrest. Dabei können diese Reste auch verzweigt, oder unverzweigt, chiral oder achiral sein.

Unter dem Begriff Cycloalkyl werden mono- oder bicyclische gesättigte Gruppen mit 3 bis 8 C-Atomcn verstanden, z. B. Cyclohexyl, Cyclopentyl oder Cyclopropyl, wobei Cyclohexyl bevorzugt wird.

Unter dem Begriff "gegebenenfalls durch ein oder zwei Halogenatome substituierter Benzylrest" werden verschiedene mono- oder disubstituierte Benzylreste verstanden, die z. B. durch Fluor, Chlor oder Brom substituiert sind.

Unter dem Begriff Heteroaryl werden mono- oder bicyclische ungesättigte Reste verstanden, die ein oder mehrere "Heteroatome" (z.B. N, O, oder S enthalten). Diese Reste können z. B. 6-gliedrige und/oder 5-gliedrige Ringe enthalten. Als Beispiele für stickstoffhaltige Reste seien genannt: Pyridin, Pyrimidin, Pyrazin, Pyridazin, Pyrrol, Imidazol, Triazol; für schwefelhaltige Reste: Thiophen oder Thiazol; und für sauerstoffhaltige Reste: Furan oder Oxazol.

Aufgrund der quartären Struktur am Stickstoffarom liegt eine positive Ladung im Molekül vor, die z. B. durch Gegenionen kompensiert werden kann. Typische Anionen in den Salzen sind z. B. Chorid, Bromid, Fluoride, Hydrogensulfate, Sulfate, Phosphate, Hydrogenphosphate, Formiate, Acetate oder Propionate. Bevorzugt werden Chloride eingesetzt.

Bevorzugt wird eine Zusammensetzung, die als organische Komponente (K) eine Verbindung der allgemeinen Formel (1) enthält, wobei die Reste unabhängig voneinander folgende Bedeutungen haben:
R¹ bedeutet einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist;
R² bedeutet einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist;
R³ bedeutet einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist;
R⁴ bedeutet einen Alkylrest mit 1 bis 18 C-Atomen, einen Cyclo-alkylrest mit 3 bis 7 C-Atomen, einen Phenylrest, einen gegebenenfalls durch ein oder zwei Halogenatome substituierten Benzylrest, einen Pyridinrest, einen Pyrimidinrest, einen Pyrazinrest, einen Pyridazinrest, einen Pyrrolrest oder einen Imidazolrest bedeutet;
R⁵ einen Alkylrest mit 1 bis 18 C-Atomen, einen Cyclo-alkylrest mit 3 bis 7 C-Atomen, einen Phenylrest, einen Benzylrest, einen Pyridinrest, einen Pyrimidinrest, einen Pyrazinrest, einen Pyridazinrest, einen Pyrrolrest oder einen Imidazolrest bedeutet;
R⁶ einen Alkylrest mit 8 bis 18 C-Atomen;
und n eine ganze Zahl von 1 bis 4 bedeutet.

Bevorzugt werden die Verbindungen (K) in einer wässrigen Lösung eingesetzt.

Als organische Komponente (K) wird vorzugsweise eine quaternäre Ammonium-Verbindung der allgemeinen Formel (I) eingesetzt, wobei die Reste unabhängig voneinander folgende Bedeutungen haben:
R¹, R², R³ bedeuten jeweils einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist; bevorzugt ist Methyl;
R⁴ bedeutet einen Alkylrest mit 1 bis 18 C-Atomen, einen Phenylrest oder einen Benzylrest,
R⁵ einen Alkylrest mit 1 bis 18 C-Atomen bedeutet;
R⁶ einen Alkylrest mit 8 bis 18 C-Atomen bedeutet;
und n eine ganze Zahl von 2 bis 4 bedeutet.

Wenigstens einer der Reste R⁴, R⁵ und R⁶ in der allgemeinen Formel (I) sollte vorzugsweise einen langkettigen, vorzugsweise unverzweigten Alkylrest bedeuten, z. B. mit 10 bis 18 C-Atomen.

Die Erfindung betrifft auch eine Zusammensetzung, die als organische Komponente (K) eine Verbindung der allgemeinen Formel (I) enthält, wobei
R', R² und R³ gleich sind und einen verzweigten oder nicht verzweigten Alkylrest mit 1 bis 4 C-Atomen, insbesondere Methyl bedeuten,
n eine ganze Zahl von 1 bis 4, insbesondere die Zahl 3 ist,
R⁴ gleich Methyl ist,
R⁵ gleich Alkyl mit 1 bis 12 C-Atomen ist, insbesondere eine Methyl- oder Decylgruppe, und
R⁶ gleich Alkyl mit 8 bis 18 C-Atomen, insbesondere eine Decyl- oder Octadecylgruppe ist.

Die erfindungsgemäßen Zusammensetzungen sind ferner dadurch gekennzeichnet, dass sie als Metallsalz-Komponente (M) mindestens ein Salz eines mehrwertigen, bevorzugt eines zweiwertigen, dreiwertigen oder vierwertigen Metalls enthalten. Sie können aber auch geringe Mengen eines 5-wertigen Metalls enthalten.

In einer besonderen Ausführungsform enthalten sie als Metallsalz-Komponente (M) mindestens ein Salz eines zweiwertigen, dreiwertigen oder vierwertigen Metalls aus der Gruppe Mg, Ca, Ba, Zn, Sn; Al, Ga, Fe; und Ti.

Als Metallsalz-Komponente (M) können sie auch ein Salz eines zweiwertigen Metalls aus der Gruppe Mg, Ca, Ba, Zn und/oder ein Salz eines dreiwertigen Metalls aus der Gruppe Al und Fe enthalten, wobei sich auch bei der Kombination eines zweiwertigen und eines dreiwertigen Salzes, z. B. eines Calciumsalzes und eines Aluminiumsalzes, gute Ergebnisse erzielen lassen.

Insbesondere die Kombination von Aluminium-III-Salzen mit zweiwertigen Metallsalzen hat sich bewährt.

In einer bevorzugten Ausführungsform betrifft die Erfindung eine Zusammensetzung, die als organische Komponente (K) der allgemeinen Formel (I) ein Dimethyl-tetradecyl-(3-(trimethoxysilyl)-propyl)-ammonium-Salz, z. B. das Chlorid, oder ein Dimethyl-octadecyl-(3-(trimethoxysilyl)-propyl)-ammonium-Salz, z. B. ein Chlorid, enthält und als Metallsalz-Komponente (M) ein Salz eines zweiwertigen Metalls aus der Gruppe Mg, Ca, Zn und/oder ein Salz eines dreiwertigen Metalls aus der Gruppe Al und Fe enthält.

Dabei sind als Gegen-Ionen in den Metallsalzen verschiedene Anionen geeignet, z. B. die Chloride, Hydroxide, Sulfate, Phosphate und Acetate.

Die erfindungsgemäßen antimikrobiellen Zusammensetzungen enthalten die beiden Komponenten (organische Komponente (K) und Metallsalzkomponente (M)) vorzugsweise in bestimmten Mengen. Dabei wird im Rahmen der vorliegenden Erfindung eine Angabe in Gew.-% verwendet. Textilvor- oder Nachbehandlungsmittel können in fester, flüssiger bzw. fließfähiger Form, z. B. als Gel, Pulver, Granulat, Paste oder Spray vorliegen und die erfindungsgemäßen Komponenten enthalten.

Die Zusammensetzungen enthalten die Metallsalzkomponente (M) vorzugsweise in Mengen von 0,01 bis 10 Gew.-%, bevorzugt von 0,02 bis 8 Gew.-%, mehr bevorzugt von 0,05 bis 2,0 Gew.-% und insbesondere von 0,02 bis 2,0 Gew.-%, bezogen auf die Gesamtzusammensetzung.

Die organische Komponente (K) wird bevorzugt, bezogen auf das Gesamtgewicht der Zusammensetzung in einer Menge von 0,01 Gew.-% bis 10 Gew.-%, bevorzugt von 0,02 bis 8 Gew.-%, mehr bevorzugt von 0,1 Gew.-% bis 3,0 Gew.-%, und insbesondere von 0,3 Gew.-% bis 2,5 Gew.-%, eingesetzt.

Das Verhältnis zwischen Metallkomponente (M) und organischer Komponente (K) ist abhängig von dem eingesetzten Metallsalz und beträgt in der antimikrobiellen Zusammensetzung bezogen auf die eingesetzten molaren Mengen z. B. von 1 : 20 bis 20 : 1, insbesondere von 1 : 10 bis 10 : 1. Wird z. B. ein dreiwertiges Metallsalz eingesetzt, so ist das Verhältnis der Komponenten häufig von 2:1 bis 1:2, insbesondere etwa 1:1. Bevorzugt werden zudem Mischungen von zwei-und dreiwertigen Metallsalzen eingesetzt.

Die erfindungsgemäße Zusammensetzung enthält häufig folgende Komponenten:
0,0 bis 10 Gew.%, insbesondere 0,05 bis 2,0 Gew.% der organischen Komponente (K) und
0,01 bis 10 Gew.%, insbesondere 0,1 bis 3 Gew.% der Metallsalz-Komponente (M) sowie
0 bis 50 Gew.%, insbesondere 1 bis 10 Gew.% eines organischen Lösungsmittels, wie z. B. Alkohole (wie Isopropanol).

Bevorzugt wird eine Zusammensetzung, die enthält:
0,3 bis 2,5 Gew.% der organischen Komponente (K) und
0,2 bis 2,0 Gew.% der Metallsalz-Komponente (M),
70 bis 99,5 Gew.% des Lösungsmittels Wasser sowie
0,1 bis 30 Gew.% an Hilfskomponenten.

Als Lösungsmittel wird bevorzugt Wasser eingesetzt sowie gegebenenfalls zusätzlich ein Alkohol, z. B. Ethanol, Methanol, Isopropanol oder Propanol. Die Zubereitungen können auch verschiedene Hilfskomponenten enthalten, z. B. einen pH-Puffer (wie Natriumacetat) oder eine Säure (wie Ameisensäure oder Essigsäure).

Die Zusammensetzung enthält ferner in einer weiteren Ausführungsform der Erfindung zum Beispiel eines oder mehrere der folgenden Hilfsmittel: pH-Puffer, Weichmacher, Hydrophobierungsmittel, Oleophobierungsmittel, Binder, Vernetzer, Flammschutzmittel, Textilfarbstoffe, Nähbarkeitsverbesserer und Schmutz-abweisende Mittel.

Gegenstand der Erfindung ist auch die Verwendung einer Zusammensetzung wie oben beschrieben zur antimikrobiellen und/oder antiviralen, insbesondere jedoch antibakteriellen Ausrüstung von Textilien, Fasern und Garnen. Die Zusammensetzung kann dabei auch eine antivirale Aktivität aufweisen.

Dabei kann eine Ausrüstung von Textilien, Fasern und Garnen nahezu jeder Art erfolgen, besonders gute Ergebnisse wurden auch mit Textilien, Fasern und Garnen erzielt, die synthetische Materialen enthalten oder die aus synthetischen Materialien bestehen. Als Beispiele seien Textilien, Fasern und Garnen aus Polyamid und/oder Polyester genannt.

Die Erfindung betrifft auch die Verwendung der oben beschriebenen Kombination einer Verbindung der allgemeinen Formel (I) mit einer Metallsalzkomponente (M) zur antimikrobiellen Ausrüstung von Textilien, Fasern und Garnen z. B. mittels Foulardverfahren, Schaumauftrag, Sprühverfahren, Beschichtung (z.B. Rakelverfahren) oder Auszugsmethode.

Dabei kann eine Zusammensetzung wie oben dargestellt eingesetzt werden, es ist jedoch auch möglich, mehrere Zubereitungen mit den einzelnen Komponenten bereitzustellen, beispielsweise eine Zubereitung mit der organischen Komponente der Formel (I) und eine Zubereitung mit der Metallsalz-Komponente.

Die Erfindung betrifft auch ein Verfahren zur Herstellung der o. g. Zusammensetzungen, bei dem die Komponenten gemischt werden.

Die Erfindung betrifft insbesondere auch die Verwendung einer Zusammensetzung zur antimikrobiellen und/oder antiviralen Ausrüstung von Textilien, Fasern und Garnen, die synthetische Materialen enthalten oder die aus synthetischen Materialien bestehen, beispielsweise Produkte enthaltend oder bestehend aus Polyamid und/oder Polyester.

Auch die Textilien, Fasern und Garne selbst, ausgerüstet mit einer antimikrobiellen (bzw. antiviralen) Zusammensetzung sind Gegenstand der Erfindung.

Auch ein Verfahren zur antimikrobiellen (bzw. antiviralen) Ausrüstung von Textilien, Fasern und Garnen ist Gegenstand der Erfindung, bei dem mindestens eine organische antimikrobielle Komponente (K) der allgemeinen Formel (I) und mindestens eine Metallsalz-Komponente (M) wie oben beschrieben sowie ggf. Lösungsmittel (L) und ggf. weitere Hilfskomponenten gleichzeitig oder zeitlich versetzt auf Textilien, Fasern oder Garne aufgebracht werden.

Die Erfindung betrifft auch Textilien, Fasern und Garne ausgerüstet mit einer antimikrobiellen (bzw. antiviralen) Zusammensetzung wie oben beschrieben bzw. ausgerüstet mit der oben beschriebenen Kombination einer Verbindung der allgemeinen Formel (I) mit einer Metallsalzkomponente (M).

Das beschriebene Verfahren zum Ausrüsten von Fasern, Garnen und/oder Textilien mit einer organischen Komponente (K) und einer Metallsalzkomponente (M) bei dem diese auf die Fasern bzw. Textilien aufgebracht werden, kann zur Herstellung von antimikrobiellen Fasern, Garnen und Textilien eingesetzt werden. Die antimikrobiell (bzw. anti-viral) ausgerüsteten Fasern können als Ausgangsprodukt für diverse Materialien für verschiedene Faserprodukte wie Kleidung (z. B. Damenoberbekleidung, Herrenbekleidung, Kinderbekleidung, Sport- und Freizeitbekleidung, Berufsbekleidung, Socken, Strümpfe und Unterwäsche), Bettzeug (z. B. Bettbezug und Laken), Heimtextilien, Sitzbezüge, Polsterstoffe, Textilien für Schuhe, Duschvorhänge, Frotteeartikel, Wischtücher, Putzmops, Filter, Teppiche, Schutzartikel (z. B. Maske und Bandage) und ähnliches verwendet werden.

Die in der vorliegenden Erfindung verwendete Basisfaser kann z.B. eine natürliche oder synthetische (chemische) Faser sein. Die natürliche Faser kann z. B. eine Pflanzenfaser sein, wie Baumwolle, Hanf, Flachs, Kokosnuss und Schilfrohr. Im Prinzip sind auch tierische Fasern, wie Ziegenhaar, Mohair, Cashmeer, Kamelhaar und Seide und mineralische Fasern mit dem Verfahren ausrüstbar.

Die chemischen Fasern sind beispielsweise Cellulosefasern, wie Viscosefaser, regenerierte, halbsynthetische Fasern, wie regeneriertes Seidegarn oder Alginatfaser. Als synthetische Fasern sind insbesondere ausrüstbar: Polyamidfaser, Polyesterfaser und deren Mischungen. Im Prinzip kann das erfindungsgemäße Verfahren auch angewendet werden auf Polypropylenfasern, Polyvinylfaser, Polyacrylfaser, Polyurethanfaser, Polyethylenfaser, Polyvinylidenfaser und Polystyrolfaser. Das Verfahren kann jedoch auch auf Mischfasern angewendet werden.

Polyamid und insbesondere Polyester werden jedoch als bevorzugtes Zielsubstrat angesehen. Somit bestand eine weitere Aufgabe darin, die antimikrobielle Ausrüstung von Textilien wie Polyester waschfester zu machen. Waschfest ist dabei eine nachweisbare antibakterielle Wirkung nach mindestens 20 Waschzyklen nach EN ISO 6330 (6A) bei 40°C. Der Nachweis erfolgt in einer Prüfung nach JIS L 1902:2002 oder nach ASTM E 2149 gegen z. B. Staphylococcus aureus ATCC 6538.

Die Keimzahlreduktion zwischen ausgerüstetem und nicht ausgerüstetem Muster beziehungsweise zwischen ausgerüstetem Muster nach der Inkubation und der Keimzahl des Inokulums sollte ungefähr zwei Zehnerputenzen betragen, um von einer guten antibakteriellen Wirkung sprechen zu können. Zur anti-viralen Wirkung wurden ebenfalls Tests durchgerührt.

Die Metallionen sollten dabei weder toxikologisch noch ökotoxikologisch relevant sein, noch dürfen sie das Textil verfärben. Am besten geeignet erscheinen die Kationen der Elemente der zweiten und dritten Hauptgruppe des Periodensystems wie Mg²⁺, Ca²⁺, Ba²⁺, Al³⁺, Ga³⁺ usw. und der vierten Hauptgruppe wie beispielsweise Ge⁴⁺ und Sn⁴⁺ und Ti⁴⁺ und der Nebengruppen wie beispielsweise 2n²⁺, Fe³⁺, Al³⁺, Sn²⁺, Ti⁴⁺.

In den nachfolgend aufgeführten Versuchen zeigten sich Calcium und Aluminium als besonders Erfolg versprechend. Gleichzeitig wurde bei beiden Kationen nicht beobachtet, dass sie einen Einfluss auf andere Textilchemikalien haben, beispielsweise Verfärbungen oder Farbveränderungen verursachen.

Die Erfindung wird nachfolgend durch die Beispiele näher erläutert.

Dabei kommt das handelsübliche Produkt Sanitized T 99-19 zum Einsatz, bei dem es sich um eine 50%ige Lösung von Dimethyl-tetradecyl-[3-(trimethoxysilyl)]-propyl-ammonium-chlorid im Lösungsmittel Methyltriglycol handelt.

### Beispiele 1 - 6:

Für die Herstellung der erfindungsgemäßcn Zusammensetzungen werden alle Angaben in Gramm gemacht. Die Applikation erfolgt mittels Foulardverfahren auf Gewebe aus Polyester (Trevira) mit einem Flächengewicht von 220 g/m².

**Tabelle 1**

| **Badansatz** | 1 | 2 | 3 | 4 | 5 | 6 |
|---|---|---|---|---|---|---|
| Wasser vorgelegt | 800 | 800 | 800 | 800 | 800 | 800 |
| Aluminiumchlorid Hexahydrat | 4,444 | 4,444 | 1,943 | 3,620 | 1,948 | 2,578 |
| Natriumacetat | 4,528 | 4,528 | 1,980 | 3,689 | 1,985 | 2,627 |
| Calciumhydroxyd | 1,278 | 1,278 | 2,430 | 1,667 | 2,438 | 2,147 |
| Essigsäure 99% | 2,070 | 2,070 | 3,935 | 2,700 | 3,947 | 3,478 |
| Sanitized T 99-19 | 26,316 | 26,316 | 26,316 | 26,316 | 26,316 | 26,316 |
| Isopropylalkohol | 50 | 50 | 50 | 50 | 50 | 50 |
| Mischungen werden während 30 Min bei 200 °C rühren gelassen; | | | | | | |
| Einstellung pH mit Ameisensäure auf | 6 | 4 | 5 | 5 | 3 | 3,75 |
| Applikation mittels Foulard auf Gewebe aus Polyester mit 220 g/m² | | | | | | |
| pick-up | 38,5 % | 38,5 % | 38,5 % | 38,5 % | 38,5% | 38,5% |
| Trocknung, Temperatur [°C] | 120 | 120 | 120 | 120 | 120 | 120 |
| Trocknung, Zeit [s] | 60 | 60 | 60 | 60 | 60 | 60 |
| Kondensation, Temperatur [°C] | 150 | 150 | 150 | 150 | 150 | 150 |
| Kondensation, Zeit [s] | 120 | 120 | 120 | 120 | 120 | 120 |
| Leistung der Ausrüstungen: | | | | | | |
| Keimreduktion nach JISL 1902:2002 gegen Staphylococcus aureus [log red] | | | | | | |
| ausgerüstet und ungewaschen | 5.4 | 5.4 | 5.4 | 5.4 | 5.4 | 5.4 |
| ausgerüstet und 10 Wäschen (40°C) | 5.4 | 5.4 | 5.4 | 2.3 | 5.4 | 5.4 |
| Gehalt Stickstoff nach Kjeldahl [mg/g] ausgerüstet und 10 Wäschen (40°C) | 0.0251 | 0.0628 | 0.0477 | 0.0253 | 0,0851 | 0.0624 |

Bei weiteren Versuchen mit Zusammensetzungen analog zu den Beispielen 5 und 6 werden die besonders guten Resultate in weiteren Versuchen bestätigt. Dabei wird in Zehnerschritten bis zu 30 mal gewaschen und geprüft. Die Reduktion der Keimzahl beträgt dabei jeweils mindestens 2 Zehnerpotenzen nach beiden Methoden (ASTM E 2149 beziehungsweise nach JIS L 1902:2002). Es kann eine deutliche antibakterielle Wirkung in den Versuchen bestätigt werden.

In einer weiteren Untersuchung wird versucht, die Herstellung der Zusammensetzungen für den Anwender in der Textilindustrie zu vereinfachen. Das Ziel ist es, in den Appreturküchen, wo die Ansätze normalerweise durchgeführt werden, den Badansatz deutlich zu vereinfachen, so dass weniger verschiedene Chemikalien, die zudem recht genau dosiert werden müssen, eingesetzt werden müssen. Das hat u. a. die Zielsetzung, die Fehlerwahrscheinlichkeit zu reduzieren und die Handhabbarkeit der Rezepte wesentlich zu vereinfachen.

Dazu werden gebrauchsfertige Lösungen hergestellt, indem eine 5%igc wässrige Lösung des Produktes Sanitized T 99-19 mit den entsprechenden Mengen Aluminiumchlorid und Calciumchlorid, dem Acetatpuffer und Isopropanol versetzt wird. Solche Formulierungen sind nur für wenige Stunden stabil und fallen jedoch anschließend aus. In weniger konzentrierter Form sind diese Formulierungen ausreichend stabil, aber als Additive für die gesamte Logistik wegen Verpackungs-, Transport- und Lagerkosten weniger attraktiv.

Aus diesem Grund wird versucht, die beiden Lösungen, die mit den Salzen und dem Puffer von derjenigen mit dem Wirkstoff zu trennen, so dass der Anwender zwei Lösungen handhaben muss (Kit-of-parts). Aus Löslichkeitsgründen wird in einem weiteren Versuch das mäßig lösliche Calciumhydroxyd gegen das sehr gut lösliche Calciumchlorid ersetzt.

Es wird zudem versucht, das organische Lösungsmittel Isopropylalkohol gegen Wasser zu ersetzen. Als weitere Vereinfachung des Systems wird ferner versucht, den Acetatpuffer im System ersatzlos zu streichen.

### Beispiel 7:

971,6 g Wasser (Leitungswasser) werden vorgelegt. Dann werden nacheinander unter Rühren, 7,5 g Aluminiumchlorid Hexahydrat (CAS: 7784-13-6), 14,0 g Calciumchlorid (CAS: 10043-52-4), 2,0 g Natriumacetat Trihydrat (CAS: 6131-90-4) und 4,9 g Essigsäure 80%ig (CAS 64-19-7) zugegeben. Von dieser Lösung werden 150 g in 835 g Wasser gegeben und unter Rühren werden 15 g Sanitized T 99-15 zugegeben. Es wird 30 Minuten bei Raumtemperatur gerührt und die klare Lösung wird mittels Foulardapplikation auf Gewebe aus weißem Polyester appliziert. Der pick-up beträgt 45% und somit ist die Aufnahme an Sanitized T 99-19 0,67%.

Von der gleichen Lösung werden nach 4 Stunden, 24 Stunden und 48 Stunden Standzeit bei Raumtemperatur die Applikationen wiederholt. Interessanterweise ist das Bad nach 48 Stunden trüb.

Die ausgerüsteten Textilien werden nach ASTM E 2149 gegen Staphylococcus aureus geprüft. Alle Muster zeigen eine gute bis hervorragende Wirkung gegen die Bakterien auch noch nach 30 Waschzyklen.

### Beispiel 8:

921,6 g Wasser (Leitungswasser) werden vorgelegt und darin werden nacheinander unter Rühren, 7,5 g Aluminiumchlorid Hexahydrat (CAS: 7784-13-6), 14,0 g Calciumchlorid (CAS: 10043-52-4), 2,0 g Natriumacetat Trihydrat (CAS: 6131-90-4),4,9 g Essigsäure 80%ig (CAS 64-19-7) und 50 g Isopropylalkohol (CAS: 67-63-0) zugegeben. Von dieser Lösung werden 150 g in 835 g Wasser gegeben und unter Rühren werden 15 g Sanitized T 99-19 zugegeben. Es wird 30 Minuten bei Raumtemperatur gerührt. Die klare Lösung wird mittels Foulardapplikation auf Gewebe aus weißem Polyester appliziert. Der pick-up beträgt 45% und somit ist die Aufnahme an Sanitized T 99-19 0,67%. Von der gleichen Lösung werden nach 4 Stunden, 24 Stunden und 48 Stunden Standzeit bei Raumtemperatur die Applikationen wiederholt. Interessanterweise wird das Bad nach rund 48 Stunden trüb.

Die ausgerüsteten Textilien werden nach ASTM E 2149 gegen Staphylococcus aureus geprüft. Alle Muster zeigen eine gute bis hervorragende Wirkung gegen die Bakterien auch noch nach 30 Waschzyklen. - Das Resultate zeigt keine relevanten Unterschiede zu dem Beispiel 7.

Dernzufolge ist Isopronylalkohol für diese Applikation nicht notwendig und kann für Spezialfälle wie für Superhydrophobbeschichtungen angewendet werden.

### Beispiel 9:

978.5 g Wasser (Leitungswasser) werden vorgelegt und darin werden nacheinander unter Rühren, 7,5 g Aluminiumchlorid Hexahydrat (CAS: 7784-13-6), und 14,0 g Calciumchlorid (CAS: 10043-52-4) zugegeben. Von dieser Lösung werden 150 g in 835 g Wasser gegeben und unter Rühren werden 15 g Sanitized T 99-19 zugegeben. Es wird 30 Minuten bei Raumtemperatur gerührt und die klare Lösung wird mittels Foulardapplikation auf Gewebe aus weißem Polyester appliziert. Der pick-up beträgt 45% und somit ist die Aufnahme an Sanitized T 99-19 0,67%. Von der gleichen Lösung werden nach 4 Stunden, 24 Stunden und 48 Stunden Standzeit bei Raumtemperatur die Applikationen wiederholt. Interessanterweise wird das Bad bereits nach rund 4 Stunden trüb.

Die ausgerüsteten Textilien werden nach ASTM E 2149 gegen Staphylococcus aureus geprüft. Alle Muster zeigen eine gute bis hervorragende Wirkung gegen die Bakterien auch noch nach 30 Waschzyklen. Allerdings sind die Resultate weniger positiv als diejenigen der Beispiele 7 und 8. Eine Relevanz wird für das Puffersystem hier nicht gefunden, insbesondere weil die Lösung auch ohne den Acetatpuffer sauer reagiert.

### Beispiele 10 bis 12

Analog zu den Ansätzen aus den Beispielen 7 bis 9 werden Versuche mit einer wässrigen Lösung von Dimethyl-octadecyl-[3-(trimethoxysilyl)-propyl]-ammoniumchlorid durchgeführt, wobei auf 150 g der Lösung des quarternären Ammoniumsalzes 130 g der Salzlösungen mit und ohne Isopropanol und mit und ohne Acetatpuffer verwendet werden.

Diese Ansätze sind von Anfang an trüb und zeigen eine deutlich höhere Viskosität als die von den Beispielen 7 bis 9, werden aber so appliziert und geprüft. Nach 20 Waschzyklen zeigen die Produkte eine ausreichende bis gute antibakterielle Wirkung.

### Beispiel 13:

27,8 g Aluminiumchlorid Hexahydrat werden in 965,3 g Wasser gelöst und mit 2,0 g Natriumacetat Trihydrat und 4,9 g Essigsäure 80%ig versetzt. Die Lösung wird auf dem Magnetrührer 5 Minuten bei Raumtemperatur gerührt. Es werden 835 g Wasser vorgelegt und 15 g Sanitized T 99-19 zugeben, kurz umrühren, dann 150 g der Aluminiumchloridlösung zugeben und 30 Minuten bei Raumtemperatur auf dem Magnetrührer nachrühren.

Diese Flotte wird mittels Foulardverfahren auf Gewebe aus Polyester appliziert und das Gewebe wird anschließend bei 120°C auf dem Spannrahmen getrocknet und die so erhaltenen Muster werden bei 40°C 10, 20 beziehungsweise 30 mal bei 40°C gewaschen und anschließend nach ASTM E 2149 gegen Staphylococcus aureus ATCC 6538 geprüft. Die Resultate zeigen eine Reduktion der Bakterien mit einem Faktor über 100 gegenüber dem unausgeriisteten Kontrollmuster.

### Beispiel 14:

7,5 g Aluminiumchlorid Hexahydrat und 30,8 g Bariumchlorid Dihydrat (CAS: 10326-27-9) werden in 954,8 g Wasser gelöst und mit 2,0 g Natriumacetat Trihydrat und 4,9 g Essigsäure 80%ig versetzt. Die Lösung wird auf dem Magnetrührer 5 Minuten bei Raumtemperatur gerührt. 835 g Wasser vorlegen und 15 g Sanitized T 99-19 zugeben, kurz umrühren, dann 150 g der Salz/Acetatpufferlösung und 30 Minuten bei Raumtemperatur auf dem Magnetrührer nachrühren.

Diese Flotte wird mittels Foulardverfahren auf Gewebe aus Polyester appliziert und das Gewebe wird anschließend bei 120°C auf dem Spannrahmen getrocknet und die so erhaltenen Muster werden bei 40°C 10, 20 beziehungsweise 30 mal bei 40°C gewaschen und anschließend nach ASTM E 2149 gegen Staphylococcus aureus ATCC 6538 geprüft.

Die Resultate zeigen eine Reduktion der Bakterien mit einem Faktor über 100 gegenüber dem unausgerüsteten Kontrollmuster.

### Beispiel 15:

7,5 g Aluminiumchlorid Hexahydrat und 25,6 g Magnesiumchlorid Hexahydrat (CAS: 7791-18-6) werden in 960 g Wasser gelöst und mit 2,0 g Natriumacetat Trihydrat und 4,9 g Essigsäure 80%ig versetzt. Die Lösung wird auf dem Magnetrührer 5 Minuten bei Raumtemperatur gerührt. 835 g Wasser vorlegen und 15 g Sanitized T 99-19 zugeben, kurz umrühren, dann 150 g der Salz/Acetatpufferlösung zugeben und 30 Minuten bei Raumtemperatur auf dem Magnetrührer nachrühren.

Diese Flotte wird mittels Foulardverfahren auf Gewebe aus Polyester appliziert und das Gewebe wird anschließend bei 120°C auf dem Spannrahmen getrocknet und die so erhaltenen Muster werden bei 40°C 10, 20 beziehungsweise 30 mal bei 40°C gewaschen und anschließend nach ASTM E 2149 gegen Staphylococcus aureus ATCC 6538 geprüft. Die Resultate zeigen eine Reduktion der Bakterien mit einem Faktor über 100 gegenüber dem unausgerüsteten Kontrollmuster.

### Beispiel 16:

7,5 g Aluminiumchlorid Hexahydrat und 27,6 g Zinkacetat Dihydrat (CAS: 5970-45-6) werden in 958 g Wasser gelöst und mit 2,0 g Natriumacetat Trihydrat und 4,9 g Essigsäure 80%ig versetzt. Die Lösung wird auf dem Magnetrührer 5 Minuten bei Raumtemperatur gerührt.

835 g Wasser vorlegen und 15 g Sanitized T 99-19 zugeben, kurz umrühren, dann 150 g der Salz/Acetatpufferlösung zugeben und 30 Minuten bei Raumtemperatur auf dem Magnetrührer nachrühren. Diese Flotte wird mittels Foulardverfahren auf Gewebe aus Polyester appliziert und das Gewebe wird anschließend bei 120°C auf dem Spannrahmen getrocknet und die so erhaltenen Muster werden bei 40°C 10, 20 beziehungsweise 30 mal bei 40°C gewaschen und anschließend nach ASTM E 2149 gegen Staphylococcus aureus ATCC 6538 geprüft.

Die Resultate zeigen eine Reduktion der Bakterien mit einem Faktor über 100 gegenüber dem unausgerüsteten Kontrollmuster.

### Beispiel 17:

42,2 g Bariumchlorid Dihydrat werden in 950.9 g Wasser gelöst und mit 2,0 g Natriumacetat Trihydrat und 4,9 g Essigsäure 80%ig versetzt. Die Lösung wird auf dem Magnetrührer 5 Minuten bei Raumtemperatur gerührt.

835 g Wasser vorlegen und 15 g Sanitized T 99-19 zugeben, kurz umrühren, dann 150 g der Salz/Acetatpufferlösung zugeben und 30 Minuten bei Raumtemperatur auf dem Magnetrührer nachrühren. Diese Flotte wird mittels Foulardverfahren auf Gewebe aus Polyester appliziert und das Gewebe wurde anschließend bei 120°C auf dem Spannrahmen getrocknet und die so erhaltenen Muster werden bei 40°C 10, 20 bezichungsweise 30 mal bei 40°C gewaschen und anschließend nach ASTM E 2149 gegen Staphylococcus aureus ATCC 6538 geprüft. Die Resultate zeigen eine Reduktion der Bakterien mit einem Faktor über 100 gegenüber dem unausgerüsteten Kontrollmuster.

### Beispiel 18:

19,2 g Calciumchlorid werden in 973,9 g Wasser gelöst und mit 2,0 g Natriumacetat Trihydrat und 4,9 Essigsäure 80%ig versetzt. Die Lösung wird auf dem Magnetrührer 5 Minuten bei Raumtemperatur gerührt.

835 g Wasser vorlegen und 15 g Sanitized T 99-19 zugeben, kurz umrühren, dann 150 g der Salz/Acetatpufferlösung zugeben und 30 Minuten bei Raumtemperatur auf dem Magnetrührer nachrühren.

Diese Flotte wird mittels Foulardverfahren auf Gewebe aus Polyester appliziert und das Gewebe wird anschließen bei 120°C auf dem Spannrahmen getrocknet und die so erhaltenen Muster werden bei 40°C 10, 20 beziehungsweise 30 mal bei 40°C gewaschen und anschließend nach ASTM E 2149 gegen Staphylococcus aureus ATCC 6538 geprüft.

Die Resultate zeigen eine Reduktion der Bakterien mit einem Faktor über 100 gegenüber dem unausgerüsteten Kontrollmuster.

### Beispiel 19:

35.0 g Magnesiumchlorid Hexahydrat werden in 958,1 g Wasser gelöst und mit 2,0 g Natriumacetat Trihydrat und 4,9 g Essigsäure 80%ig versetzt. Die Lösung wird auf dem Magnetrührer 5 Minuten bei Raumtemperatur gerührt.

835 g Wasser vorlegen und 15 g Sanitized T 99-19 zugeben, kurz umrühren, dann 150 g der Salz/Acetatpufferlösung zugeben und 30 Minuten bei Raumtemperatur auf dem Magnetrührer nachrühren. Diese Flotte wird mittels Foulardverfahren auf Gewebe aus Polyester appliziert und das Gewebe wird anschließend bei 120°C auf dem Spannrahmen getrocknet und die so erhaltenen Muster werden bei 40°C 10, 20 beziehungsweise 30 mal bei 40°C gewaschen und anschließend nach ASTM E 2149 gegen Staphylococcus aureus ATCC 6538 geprüft. Die Resultate zeigen eine Reduktion der Bakterien mit einem Faktor über 100 gegenüber dem unausgerüsteten Kontrollmuster.

### Beispiel 20:

37,8 g Zinkacetat Dihydrat werden in 958,1 g Wasser gelöst und mit 2,0 g Natriumacetat Trihydrat und 4,9 g Essigsäure 80%ig versetzt. Die Lösung wird auf dem Magnetrührer 5 Minuten bei Raumtemperatur gerührt.

835 g Wasser vorlegen und 15 g Sanitized T 99-19 zugeben, kurz umrühren, dann 150 g der Salz/Acetatpufferlösung zugeben und 30 Minuten bei Raumtemperatur auf dem Magnetrührer nachrühren. Diese Flotte wird mittels Foulardverfahren auf Gewebe aus Polyester appliziert und das Gewebe wurde anschließend bei 120°C auf dem Spannrahmen getrocknet und die so erhaltenen Muster werden bei 40°C 10, 20 beziehungsweise 30 mal bei 40°C gewaschen und anschließend nach ASTM E 2149 gegen Staphylococcus aureus ATCC 6538 geprüft. Die Resultate zeigen eine Reduktion der Bakterien mit einem Faktor über 100 gegenüber dem unausgerüsteten Kontrollmuster.

### Beispiel 21:

971,6 g Wasser (Leitungswasser) werden vorgelegt und darin werden nacheinander unter Rühren, 75 g Aluminiumchlorid Hexahydrat, 140 g Calciumchlorid, 20 g Natriumacetat Trihydrat und 49 g Essigsäure 80%ig zugegeben, wobei sich die Lösung während der Zugaben und Lösung der Salze stark erwärmt. Von dieser Lösung werden 20 g in 960 g Wasser gegeben und unter Rühren werden 20 g Sanitized T 99-15 zugegeben. 30 Minuten bei Raumtemperatur gerührt und die klare Lösung wird mittels Foulardapplikation auf Gewebe aus weißem Polyester appliziert. Der pick-up beträgt 45% und somit ist die Aufnahme an Sanitized T 99-19 0,67%. Von der gleichen Lösung werden nach 4 Stunden, 24 Stunden und fünf Tagen Standzeit bei Raumtemperatur die Applikationen wiederholt. Das Bad wird nach rund 48 Stunden trüb.

Die ausgerüsteten Textilien werden nach ASTM E 2149 gegen Staphylococcus aureus geprüft. Alle Muster zeigen eine gute bis hervorragende Wirkung gegen die Bakterien auch noch nach 30 Waschzyklen.

### Beispiel 22:

400 g Wasser wird vorgelegt und darin werden nacheinander 0,37 g Aluminiumchlorid Hexahydrat, 0,99 g Natriumacetat Trihydrat, 0,47 g Calciumhydroxid, 2,47 g Essigsäure 80%, 5,07 g Sanitized T 99-19 und 25 g Isopropanol gelöst. Der pH wird mit Ameisensäure auf 3 eingestellt, das Bad wird 30 Minuten bei Raumtemperatur rühren gelassen. Nun gibt man 32,5 g Arkofix NES fl, ein modifiziertes Dimethylol-dihydroxyethylen-harnstoff Derivat, ein extrem formaldehydarmer Vernetzer für die bügelarme oder bügelfreie Ausrüstung von Cellulosefasern vom Hersteller Clariant (Schweiz) zu, gefolgt von 4 g einer 50%igen Magnesiumchlorid Hexahydrat Lösung in Wasser, 7,5 g Ceranin HDP fl., ein amphoterer Weichmacher auf der Basis Polyethylen, 7,5 g vom permanenten, nicht ionogenen Weichmacher Ceraperm SAP fl.

Auf der Basis von Microsiloxan und Polyethylen und dem optischen Aufheller Leucophor BLR fl., ein anionisches Stilben Derivat und wie alle anderen eingesetzten Textilchemikalien ebenfalls vom Hersteller Clariant.

Mit Wasser wird auf 500 g aufgefüllt. Dieses Bad wird mittels Foulardverfahren auf ein Textil, das hauptsächlich aus Polyester und Baumwolle besteht, so appliziert 0,6% Sanitized T 99-19 auf dem fertigen Gewebe sind, was einem pick-up von 60% entspricht. Das Textil wird auf dem Spannrahmen bei 150°C getrocknet und kondensiert, so dass die Temperatur für zwei Minuten bei der Endtemperatur gehalten worden ist.

Dieses Textil, das üblicherweise für Arbeitsbekleidung eingesetzt wird, wird bei 60°C 50 mal gewaschen und immer nach 10 Waschzyklen geprüft. Nach 50 Wäschen wird im Test nach ASTM E 2149 eine Reduktion der Keimzahl von 10^{2,5} erreicht, was ein ausgezeichneter Wert ist. Praktisch die gleiche Reduktion der Keimzahl (10^{2.8}) wird erreicht, als das Textil bei 175°C für 30 Sekunden effektiver Kondensationszeit behandelt worden ist.

### Beispiel 23:

Ein Gewebe ausgerüstet nach den Beispielen 5 und 21 wird mit einer Suspension mit Viren (hüllenlose Phagen MS2) in einer Konzentration von 10⁵ Viren pro ml versetzt. Die Konzentration an Viren fällt innerhalb von 60 Minuten von 20000 und 25000 auf Null. Diese drastische Reduktion der Virenzahl zeigt, dass die Zubereitungen viruzide Eigenschaften haben.

### Beispiel 24:

Zuerst wird die Salzlösung (SL) wie folgt hergestellt:
6,0 Liter Wasser werden vorgelegt und darin nacheinander 750 Gramm Aluminiumchlorid Hexahydrat, 2,56 Kilogramm Magnesiumchlorid Hexahydrat, 200 Gramm Natriumacetat Trihydrat und 490 Gramm Essigsäure (80%) gelöst. Diese Lösung ist so ausgelegt, dass sie 1:1 mit dem antibakteriellen Produkt Sanitized T 99-19 eingesetzt werden kann.

982 Gramm Wasser werden vorgelegt und dann werden nacheinander 8,0 Gramm der Salzlösung (SL), 8,0 Gramm Sanitized T 99-19 und 1,0 Gramm Hostapal MRN (einem nichtionogenen Netzmittel von Clariant, Schweiz) und 1,0 Gramm Essigsäure (80%) eingerührt. Die homogene Lösung lässt man für eine Stunde bei Raumtemperatur stehen. Mittels eines Foulards wird diese

Lösung auf ein oranges Textil aus reinem Polyester mit einem Flächengewicht von ca 133 Gramm pro Quadratmeter appliziert.

Der Pick-up beträgt 79% und somit ist die Konzentration vom Sanitized T 99-19 und der Salzlösung (SL) je 0,63% bezogen auf die Masse des trockenen Textils. Das Textil wird bei 130 °C, gemessen auf der Textiloberfläche, während 60 Sekunden getrocknet. Die Muster werden direkt nach der Ausrüstung und nach 20 Waschzyklen nach EN ISO 6330 (6A) bei 40 °C nach der Methode nach ASTM E 2149 gegen Staphylococcus aureus ATCC 6538 geprüft. Die Werte der Keimreduktion in dekadischem Logarithmus ist für das ungewaschene Muster über 3,7 und für das 20-fach gewaschene Muster 2,6. Diese Werte entsprechen der Reduktion der Keime um Faktor größer 5000 bzw. 400 gegenüber dem Inokulum, was ausgezeichnete Werte sind.

### Beispiel 25:

In einem Stahlbehälter werden 46 Kilogramm Wasser vorgelegt und 500 Gramm der Salzlösung (SL) vom Beispiel 24 eingerührt, 50 Gramm Sanitized T 99-19 werden anschließend eingeführt. Diese Flotte lässt man für eine Stunde bei Raumtemperatur stehen und rührt anschließend nacheinander 2,0 Kilogramm Nuva TTC (ein leicht kationisches Fluorcarbon für Oel- und Wasserabweisung von Textilien, Hersteller: Clariant, Schweiz) und 500 Gramm Cassurit FF (ein nichtionoges Vernetzungsmittel zur Verbesserung der Haltbarkeit von Oel- und Wasserabweisenden Textilausrüstungen, Hersteller: Clariant), in die Flotte ein.

Mit Essigsäure wird der pH-Wert auf 4,2 eingestellt und die Flotte wird gleich im Foulard auf ein weißes Mischgewebe für Laborbekleidung aus 65% Polyester und 35% Baumwolle mit einem Flächengewicht von 90 Gramm pro Quadratmeter appliziert. Der Pick-up beträgt 73%, was einer applizierten Menge von 0,73% Sanitized T 99-19 und 0,73% der Salzlösung (SL) entspricht. Das Gewebe wird auf einem 18 Meter langen Spannrahmen bei 180°C (Temperatur der Felder) mit einer Geschwindigkeit von 15 Meter pro Minute getrocknet und kondensiert.

Dei antimikrobielle Wirksamkeit wird nach ASTM E 2149 gegen Staphylococcus aureus ATCC 6538 nach 100 Waschzyklen nach EN ISO 6330 (3A) 60°C geprüft. Die Reduktion der Keimzahl ist 10^{2,2} (rund Faktor 160) gegenüber dem Inokulum.

### Beispiele 26 - 30:

Für fünf verschiedene Gewebe für Sportunterwäsche aus Polyester (PES) und zum Teil mit Wolle (WO) wurden Laborrezepturen eingestellt. Die Applikationen erfolgen auf vorgewaschenes Gewebe im Foulardverfahren und die Trocknung erfolgt auf dem Spannrahmen mit IR-Temperaturmessung auf der Textiloberfläche.

Die Trocknungszeit beträgt jeweils 60 Sekunden bei der Oberflächentemperatur des Textils von 120°C. Die antibakterielle Wirksamkeit wird nach 25 Waschzyklen nach EN ISO 6330 (6A) nach ASTM E 2149 gegen Staphylococcus aurcus ATCC 6538 geprüft.

**Tabelle 2**

| | 100% PES, Art. 28387 hellgrau | 74% PES, 26% WO, schwarz | 100% PES, Art. 89479 hellgrau | 80% PES, 20% WO schwarz | 77% PES 23% WO dunkelgrau |
|---|---|---|---|---|---|
| Essigsäure 80% | 0.5 g/l | 0.5 g/l | 0.5 g/l | 0.5 g/l | 0.5 g/l |
| Hostapal MRN fl. | 0.5 g/l | 0.5 g/l | 0.5 g/l | 0.5 g/l | 0.5 g/l |
| Sanitized^{®}T 99-19 | 8.0 g/l | 8.0 g/l | 8.0 g/l | 8.0 g/l | 8.0 g/l |
| RP 26-19 (13) | 8.0 g/l | 8.0 g/l | 8.0 g/l | 8.0 g/l | 8.0 g/l |
| pH mit Essigsäure einstellen | 4.5 - 5 | 4.5 - 5 | 4.5 - 5 | 4.5-5 | 4.5 - 5 |
| Pick up | 77% | 77% | 76% | 75% | 75% |
| Gehalt an Sanitized^{®}T 99-19 | 0.61% | 0.61% | 0.60% | 0.60% | 0.60% |
| Prüfung | | | | | |
| Log Reduktion nach 25 Wäschen | > 3,8 | 2,6 | > 3,8 | 2,3 | 2,0 |

### Beispiel 31:

Ungefärbtes Gewebe mit einem Flächengewicht von 133 Gramm pro Quadratmeter aus reinem Polyester aus Mikrofaser, das wegen seiner hohen spezifischen Oberfläche besonders heikel für waschfeste Ausrüstungen mit aller Art von Produkten im Finishing ist, wird mit Sanitized T 99-19 und der Salzmischung wie nachfolgend beschrieben ausgerüstet:
984 Gramm Wasser vorlegen, 8,0 Gramm der Salzlösung (SL) aus Beispiel 24 einrühren, dann 8,0 Gramm Sanitized T 99-19 einrühren, bis eine homogene Lösung entsteht. Der pH wird mit Essigsäure auf 4,5 eingestellt. Die Lösung eine Stunde bei Raumtemperatur stehen lassen und anschließend im Foulardverfahren auf das Mikrofasergewebe applizieren. Der Pick-up ist 85% und somit die Aufnahme je 0,68% der Produkte Sanitized T 99-19 und der Salzlösung. Das Muster wird auf dem Spannrahmen getrocknet und für 90 Sekunden bei 150°C kondensiert. Die Prüfung gegen Staphylococcus aureus ATCC 6538 und gegen Klebsiella pneumoniea ATCC 4352 erfolgt nach 20 Waschzyklen EN ISO 6330 (6A) 40°C. Die Reduktion der Keimzahl ist bei dem Staphylococcus 10^{3,2} (Faktor 1600) und beim Klebsiella 10^{1,8} (Faktor 60) gegenüber dem Inokulum.

Die identische Kontrollausrüstung ergab nach 20 Wäschen 10>^{3,2} und nach 30 und nach 40 Waschzyklen war die Reduktion der Staphylokokken immer noch 10^{3,1} (Faktor 1250) gegenüber dem Inokulum.

Das gleiche Textil vor der Ausrüstung braun gefärbt ergibt mit der identischen Ausrüstung nach 30 Waschzyklen ebenfalls eine Reduktion von 10^{3,1} (Faktor 1250) und nach 40 Waschzyklen noch einen Wert von 10^{1.2} gegenüber dem Inokulum.

### Beispiel 32:

Überprüfung des Einflusses der Standzeit des Bades vor der Applikation auf die Waschfestigkeit der Ausrüstung.

Applikationslösungen werden identisch der Beschreibung vom Versuch 31 hergestellt und nach 1 Stunde, 6 Stunden und 24 Stunden Standzeit bei Raumtemperatur auf Gewebe aus Polyester und auf Polyamid im Foulardverfahren appliziert und nach 15, 20 und 25 Waschzyklen nach ASTM E 2149 gegen Staphylococcus aureus ATCC 6538 geprüft. Alle Muster zeigen eine gute antibakterielle Wirkung und es kann keinerlei Unterschied zwischen den einzelnen Applikationen festgestellt werden.

Dieser Versuch wird wiederholt, wobei der pH-Wert der Flotte mit Ameisensäure auf 3 eingestellt worden ist und die Flotte diesmal sogar nach 5 Tagen appliziert worden ist. Zu dem Gewebe 100% Polyester, Trevira, 220 Gramm pro Quadratmeter vom Beispiel 32 wurde eine zweite Qualität ausgerüstet, Dacron 54 spun, 120 Gramm pro Quadratmeter. Die Muster werden bis auf 30 Waschzyklen gewaschen. Bei dieser Versuchsserie zeigen alle Muster nach 30 Waschzyklen eine Keimreduktion von mindestens Faktor 80 und zwischen den Mustern gibt es keine Unterschiede außerhalb der Streubreite des Tests.

## Patentansprüche

1. Zusammensetzung enthaltend eine organische antimikrobielle Komponente (K) und mindestens eine Metallsalz-Komponente (M) sowie ggf. ein Lösungsmittel (L) und ggf. weitere Hilfskomponenten, wobei sie als organische Komponente (K) mindestens eine Verbindung der allgemeinen Formel (I) enthält, 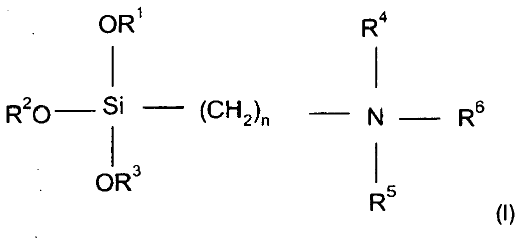 wobei die Reste unabhängig voneinander folgende Bedeutungen haben,
R¹ bedeutet einen verzweigten oder nicht verzweigten Alkylrest mit 1 bis 12 C-Atomen, wobei der Alkylrest auch substituiert sein kann durch eine Gruppe H-((CH₂)ₘ-O)_{q}, wobei m eine ganze Zahl von 0 bis 4 sein kann und q eine ganze Zahl von 1 bis 6 ist;
R² bedeutet einen verzweigten oder nicht verzweigten Alkylrest mit 1 bis 12 C-Atomen, wobei der Alkylrest auch substituiert sein kann durch eine Gruppe H-(CH₂)ₘ₋O)_{q} , wobei m eine ganze Zahl von 0 bis 4 sein kann und q eine ganze Zahl von 1 bis 6 ist;
R³ bedeutet einen verzweigten oder nicht verzweigten Alkylrest mit 1 bis 12 C-Atomen, wobei der Alkylrest auch substituiert sein kann durch eine Gruppe H-((CH₂)ₘ-O)_{q} , wobei m eine ganze Zahl von 0 bis 4 sein kann und q eine ganze Zahl von 1 bis 6 ist;
R⁴ bedeutet einen verzweigten oder nicht verzweigten Alkylrest mit 1 bis 18 C-Atomen, einen Cyclo-alkylrest mit 3 bis 7 C-Atomen, einen Phenylrest; einen gegebenenfalls durch ein oder zwei Halogenatome substituierter Benzylrest oder einen Heteroarylrest bedeutet;
R⁵ bedeutet einen verzweigten oder nicht verzweigten Alkylrest mit 1 bis 18 C-Atomen, einen Cyclo-alkylrest mit 3 bis 7 C-Atomen, einen Phenylrest, einen gegebenenfalls durch ein oder zwei Halogenatome substituierter Benzylrest oder einen Heteroarylrest bedeutet;
R⁶ bedeutet einen verzweigten oder nicht verzweigten Alkylrest mit 8 bis 18 C-Atomen;
n bedeutet eine ganze Zahl von 1 bis 6,
und wobei sie als Metallsalz-Komponente (M) mindestens ein Salz eines zwei- bis fünfwertigen Metalls enthält.

2. Zusammensetzung gemäß Patentanspruch 1, **dadurch gekennzeichnet, dass** sie als Lösungsmittel (L) Wasser und als organische Komponente (K) eine Verbindung der allgemeinen Formel (I) enthält, wobei die Reste unabhängig voneinander folgende Bedeutungen haben:
R¹ bedeutet einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist;
R² bedeutet einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist;
R³ bedeutet einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist;
R⁴ bedeutet einen Alkylrest mit 1 bis 18 C-Atomen, einen Cyclo-alkylrest mit 3 bis 7 C-Atomen, einen Phenylrest, einen gegebenenfalls durch ein oder zwei Halogenatome substituierter Benzylrest, einen Pyridinrest, einen Pyrimidinrest, einen Pyrazinrest, einen Pyridazinrest, einen Pyrrolrest oder einen Imidazolrest bedeutet;
R⁵ einen Alkylrest mit 1 bis 18 C-Atomen, einen Cyclo-alkylrest mit 3 bis 7 C-Atomen, einen Phenylrest, einen Benzylrest, einen Pyridinrest, einen Pyrimidinrest, einen Pyrazinrest, einen Pyridazinrest, einen Pyrrolrest oder einen Imidazolrest bedeutet;
R⁶ einen Alkylrest mit 8 bis 18 C-Atomen;
und n eine ganze Zahl von 1 bis 4 bedeutet.

3. Zusammensetzung gemäß einem der Patentansprüche 1 oder 2, **dadurch gekennzeichnet; dass** sie als organische Komponente (K) eine quaternäre Ammoniumverbindung der allgemeinen Formel (I) enthält, wobei die Reste unabhängig voneinander folgende Bedeutungen haben:
R¹ , R² , R³ bedeuten jeweils einen Alkylrest mit 1 bis 6 C-Atomen, wobei der Alkylrest auch substituiert sein kann durch eine Gruppe H-((CH₂)ₘ-O)_{q}, wobei m eine ganze Zahl von 1 bis 3 sein kann und q eine ganze Zahl von 1 bis 4 ist;
R⁴ bedeutet einen Alkylrest mit 1 bis 18 C-Atomen, einen Phenylrest oder einen Benzylrest,
R⁵ einen Alkylrest mit 1 bis 18 C-Atomen bedeutet;
R⁶ einen Alkylrest mit 8 bis 18 C-Atomen bedeutet;
und n eine ganze Zahl von 2 bis 4 bedeutet.

4. Zusammensetzung gemäß einem der Patentansprüche 1 bis 3, **dadurch gekennzeichnet, dass** sie als organische Komponente (K) eine quaternäre Ammoniumverbindung der allgemeinen Formel (I) enthält, wobei
R¹, R² und R³ gleich sind und einen verzweigten oder nicht verzweigten Alkylrest mit 1 bis 4 C-Atomen bedeuten,
n eine ganze Zahl von 1 bis 4 ist
R⁴ gleich Methyl ist,
R⁵ gleich Alkyl mit 1 bis 12 C-Atomen ist, und
R⁶ gleich Alkyl mit 8 bis 18 C-Atomen ist.

5. Zusammensetzung gemäß einem der Patentansprüche 1 bis 4, **dadurch gekennzeichnet, dass** sie als Metallsalz-Komponente (M) mindestens ein Salz eines zweiwertigen, dreiwertigen oder vierwertigen Metalls enthält.

6. Zusammensetzung gemäß einem der Patentansprüche 1 bis 5, **dadurch gekennzeichnet, dass** sie als Metallsalz-Komponente (M) mindestens ein Salz eines zweiwertigen, dreiwertigen oder vierwertigen Metalls aus der Gruppe Mg, Ca, Ba, Zn, Sn; Al, Ga, Fe; und Ti enthält.

7. Zusammensetzung gemäß einem der Patentansprüche 1 bis 6, **dadurch gekennzeichnet, dass** sie als Metallsalz-Komponente (M) ein Salz eines zweiwertigen Metalls aus der Gruppe Mg, Ca, Ba, Zn und/oder ein Salz eines dreiwertigen Metalls aus der Gruppe Al und Fe enthält.

8. Zusammensetzung gemäß einem der Patentansprüche 1 bis 7, **dadurch gekennzeichnet, dass** sie als organische Komponente (K) der allgemeinen Formel (I) ein Dimethyl-tetradecyl-(3-(trimethoxysilyl)-propyl)-ammonium-Salz oder ein Dimethyl-octadecyl-(3-(trimethoxysilyl)-propyl)-ammonium-Salz enthält und als Metallsalz-Komponente (M) ein Salz eines zweiwertigen Metalls aus der Gruppe Mg, Ca, Zn, Ba und/oder ein Salz eines dreiwertigen Metalls aus der Gruppe Al und Fe enthält.

9. Zusammensetzung gemäß einem der Patentansprüche 1 bis 8, **dadurch gekennzeichnet, dass** sie eine wässrige Lösung darstellt, die 0,01 bis 10 Gew.%, insbesondere 0,1 bis 3 Gew.% der organischen Komponente (K) und 0,01 bis 10 Gew.%, insbesondere 0,05 bis 2 Gew.% der Metallsalz-Komponente (M) sowie 0 bis 50 Gew.%, insbesondere 1 bis 10 Gew.% eines organischen Lösungsmittels enthält.

10. Zusammensetzung gemäß einem der Patentansprüche 1 bis 9, **dadurch gekennzeichnet, dass** sie 0,3 bis 2,5 Gew.% der organischen Komponente (K) und 0,2 bis 2,0 Gew.% der Metallsalz-Komponente (M), 70 bis 99,5 Gew.% des Lösungsmittels Wasser sowie 0,1 bis 30 Gew.% an Hilfskomponenten enthält.

11. Zusammensetzung gemäß einem der Patentansprüche 1 bis 10, **dadurch gekennzeichnet, dass** sie als Lösungsmittel Wasser sowie gegebenenfalls einen Alkohol sowie als Hilfskomponente ggf. eine oder mehrere der folgenden Hilfsmittel enthält: pH-Puffer, Weichmacher, Hydrophobierungsmittel, Oleophobierungsmittel, Binder, Vernetzer, Flammschutzmittel, Textilfarbstoffe, Nähbarkeitsverbesserer und Schmutz-abweisende Mittel.

12. Verwendung einer Zusammensetzung gemäß einem der Patentansprüche 1 bis 11 zur antimikrobiellen und/oder antiviralen Ausrüstung von Textilien, Fasern und Garnen.

13. Verwendung einer Zusammensetzung gemäß Patentanspruch 12 zur Ausrüstung von Textilien, Fasern und Garnen, die synthetische Materialen enthalten oder die aus synthetischen Materialien bestehen.

14. Verwendung gemäß Patentanspruch 12 oder 13 zur Ausrüstung von Textilien, Fasern und Garnen enthaltend Polyamid und/oder Polyester.

15. Verwendung gemäß einem der Patentansprüche 12 bis 14 zur Ausrüstung von Textilien, Fasern und Garnen mittels Foulardverfahren, Schaumauftrag, Sprühverfahren, Beschichtung oder Auszugsmethode.

16. Textilien, Fasern und Garne ausgerüstet mit einer antimikrobiellen und/oder antiviralen Zusammensetzung gemäß einem der Patentansprüche 1 bis 11.

17. Textilien, Fasern und Garne ausgerüstet mit einer antimikrobiellen Zusammensetzung gemäß einem der Patentansprüche 1 bis 11.

18. Verfahren zur antimikrobiellen und/oder antiviralen Ausrüstung von Textilien, Fasern und Garnen, bei dem mindestens eine organische antimikrobielle Komponente (K) der allgemeinen Formel (I) gemäß Patentanspruch 1 und mindestens eine Metallsalz-Komponente (M) gemäß Patentanspruch 1 sowie ggf. Lösungsmittel (L) und ggf. weitere Hilfskomponenten gleichzeitig oder zeitlich versetzt auf Textilien, Fasern oder Garne aufgebracht werden.

## Claims

1. A composition comprising an organic antimicrobial component (K) and at least one metal salt component (M) and also, where appropriate, a solvent (L) and, where appropriate, further auxiliary components, said organic component (K) comprising at least one compound of the general formula (I) 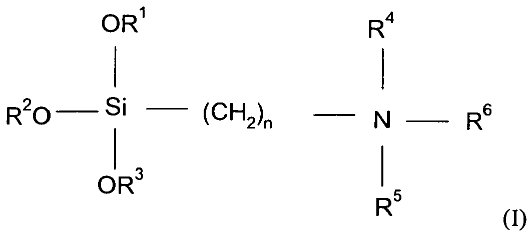 where the radicals independently have the following meanings:
R¹ is a branched or unbranched alkyl radical which has 1 to 12 carbon atoms and may also be substituted by H-((CH₂)ₘ-O)_{q}, where m may be an integer from 0 to 4 and q is an integer from 1 to 6;
R² is a branched or unbranched alkyl radical which has 1 to 12 carbon atoms and may also be substituted by H-((CH₂)ₘ-O)_{q} , where m may be an integer from 0 to 4 and q is an integer from 1 to 6;
R³ is a branched or unbranched alky radical which has 1 to 12 carbon atoms and may also be substituted by H-((CH₂)ₘ-O)_{q}, where m may be an integer from 0 to 4 and q is an integer from 1 to 6;
R⁴ is a branched or unbranched alkyl radical having 1 to 18 carbon atoms, a cycloalkyl radical having 3 to 7 carbon atoms, a phenyl radical, a benzyl radical which is optionally substituted by one or two halogen atoms, or a heteroaryl radical;
R⁵ is a branched or unbranched alkyl radical having 1 to 18 carbon atoms, a cycloalkyl radical having 3 to 7 carbon atoms, a phenyl radical, a benzyl radical which is optionally substituted by one or two halogen atoms, or a heteroaryl radical;
R⁶ is a branched or unbranched alky radical having 8 to 18 carbon atoms;
n is an integer from 1 to 6,
and said metal salt component (M) comprising at least one salt of a di- to pentavalent metal.

2. The composition as claimed in claim 1, **characterized in that** it comprises as solvent (L) water and as organic component (K) a compound of the general formula (I), where the radicals independently have the following meanings:
R¹ is an alkyl radical which has 1 to 6 carbon atoms and which may also be substituted by H-((CH₂)ₘ-O)_{q}, where m may be an integer from 1 to 3 and q is an integer from 1 to 4;
R² is an alkyl radical which has 1 to 6 carbon atoms and which may also be substituted by H-((CH₂)ₘ-O)_{q} , where m may be an integer from 1 to 3 and q is an integer from 1 to 4;
R³ is an alkyl radical which has 1 to 6 carbon atoms and which may also be substituted by H-((CH₂)ₘ-O)_{q} , where m may be an integer from 1 to 3 and q is an integer from 1 to 4;
R⁴ is an alkyl radical having 1 to 18 carbon atoms, a cycloalkyl radical having 3 to 7 carbon atoms, a phenyl radical, a benzyl radical optionally substituted by one or two halogen atoms, a pyridine radical, a pyrimidine radical, a pyrazine radical, a pyridazine radical, a pyrrole radical or an imidazole radical;
R⁵ is an alkyl radical having 1 to 18 carbon atoms, a cycloalkyl radical having 3 to 7 carbon
atoms, a phenyl radical, a benzyl radical, a pyridine radical, a pyrimidine radical, a pyrazine radical, a pyridazine radical, a pyrrole radical or an imidazole radical;
R⁶ is an alkyl radical having 8 to 18 carbon atoms;
and n is an integer from 1 to 4.

3. The composition as claimed in either of claims 1 and 2, **characterized in that** it comprises as organic component (K) a quaternary ammonium compound of the general formula (I), where the radicals independently have the following meanings:
R¹ , R² and R³ are each an alkyl radical which has 1 to 6 carbon atoms and which may also be substituted by H-((CH₂)ₘ-O)_{q} , where m may be an integer from 1 to 3 and q is an integer from 1 to 4;
R⁴ is an alkyl radical having 1 to 18 carbon atoms, a phenyl radical or a benzyl radical,
R⁵ is an alkyl radical having 1 to 18 carbon atoms;
R⁶ is an alkyl radical having 8 to 18 carbon atoms;
and n is an integer from 2 to 4.

4. The composition as claimed in any one of claims 1 to 3, **characterized in that** it comprises as organic component (K) a quaternary ammonium compound of the general formula (I), where
R¹, R² und R³ are the same and are each a branched or unbranched alkyl radical having 1 to 4 carbon atoms,
n is an integer from 1 to 4
R⁴ is methyl,
R⁵ is alkyl having 1 to 12 carbon atoms, and
R⁶ is alkyl having 8 to 18 carbon atoms.

5. The composition as claimed in any one of claims 1 to 4, **characterized in that** it comprises as metal salt component (M) at least one salt of a divalent, trivalent or tetravalent metal.

6. The composition as claimed in any one of claims 1 to 5, **characterized in that** it comprises as metal salt component (M) at least one salt of a divalent, trivalent or tetravalent metal from the group consisting of Mg, Ca, Ba, Zn, Sn; Al, Ga, Fe; and Ti.

7. The composition as claimed in any one of claims 1 to 6, **characterized in that** it comprises as metal salt component (M) a salt of a divalent metal from the group consisting of Mg, Ca, Ba, Zn and/or a salt of a trivalent metal from the group consisting of Al and Fe.

8. The composition as claimed in any one of claims 1 to 7, **characterized in that** it comprises as organic component (K) of the general formula (I) a dimethyltetradecyl-(3-(trimethoxysilyl)-propyl)ammonium salt or a dimethyloctadecyl-(3-(trimethoxysilyl)propyl)ammonium salt and as metal salt component (M) a salt of a divalent metal from the group consisting of Mg, Ca, Zn, Ba and/or a salt of a trivalent metal from the group consisting of Al and Fe.

9. The composition as claimed in any one of claims 1 to 8, **characterized in that** it represents an aqueous solution comprising 0.01% to 10% by weight, particularly 0.1% to 3% by weight of the organic component (K) and 0.01 % to 10% by weight, particularly 0.05% to 2% by weight of the metal salt component (M) and also 0% to 50% by weight, particularly 1% to 10% by weight of an organic solvent

10. The composition as claimed in any one of claims 1 to 9, **characterized in that** it comprises 0.3% to 2.5% by weight of the organic component (K) and 0.2% to 2.0% by weight of the metal salt component (M), 70% to 99.5% by weight of the solvent water and also 0.1% to 30% by weight of auxiliary components.

11. The composition as claimed in any one of claims 1 to 10, **characterized in that** it comprises as solvent water and also, where appropriate, an alcohol and also as auxiliary component, where appropriate, one or more of the following auxiliaries: pH buffers, softeners, hydrophobicizers, oleophobicizers, binders, crosslinkers, flame retardants, textile dyes, sewability improvers and soil repellents.

12. The use of a composition as claimed in any one of claims 1 to 11 for antimicrobial and/or antiviral finishing of textiles, fibers and yarns.

13. The use of a composition as claimed in claim 12 for finishing textiles, fibers and yarns containing synthetic materials or consisting of synthetic materials.

14. The use as claimed in claim 12 or 13 for finishing textiles, fibers and yarns comprising polyamide and/or polyester.

15. The use as claimed in any one of claims 12 to 14 for finishing textiles, fibers and yarns by means of padding processes, foam application, spraying processes, coating or exhaust method.

16. Textiles, fibers and yarns finished with an antimicrobial and/or antiviral composition as claimed in any one of claims 1 to 11.

17. Textiles, fibers and yarns finished with an antimicrobial composition as claimed in any one of claims 1 to 11.

18. A process for antimicrobial and/or antiviral finishing of textiles, fibers and yarns, which comprises at least one organic antimicrobial component (K) of the general formula (I) as set forth in claim 1 and at least one metal salt component (M) as set forth in claim 1 and also, where appropriate, solvent (L) and, where appropriate, further auxiliary components being applied to textiles, fibers and yarns at the same time or at different times.

## Revendications

1. Composition comprenant un composant organique antimicrobien (K) et au moins un composant consistant en un sel métallique (M), ainsi qu'éventuellement, un solvant (L) et éventuellement d'autres adjuvants, **caractérisée en ce qu'**elle contient en tant que composant organique (K) au moins un composé de formule générale (I): 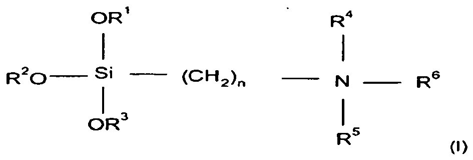 dont les substituants, indépendamment les uns des autres, ont les significations suivantes,
- R¹ est un radical alkyle, ramifié ou non ramifié, ayant de 1 à 12 atomes de carbone, ce radical alkyle pouvant être substitué par un groupe H-[(CH₂)ₘ-O]_{q}, dans lequel m peut être un nombre entier de 0 à 4 et q est un nombre entier de 1 à 6;
- R² est un radical alkyle, ramifié ou non ramifié, ayant de 1 à 12 atomes de carbone, ce radical alkyle pouvant être substitué par un groupe H-[(CH₂)ₘ-O]_{q}, dans lequel m peut être un nombre entier de 0 à 4 et q est un nombre entier de 1 à 6;
- R³ est un radical alkyle, ramifié ou non ramifié, ayant de 1 à 12 atomes de carbone, ce radical alkyle pouvant être substitué par un groupe H-[(CH₂)ₘ-O]_{q}, dans lequel m peut être un nombre entier de 0 à 4 et q est un nombre entier de 1 à 6;
- R⁴ est un radical alkyle, ramifié ou non ramifié, ayant de 1 à 18 atomes de carbone, un radical cycloalkyle ayant de 3 à 7 atomes de carbone, un radical phényle, un radical benzyle éventuellement substitué par un ou deux atomes d'halogène ou un radical hétéroaryle;
- R⁵ est un radical alkyle, ramifié ou non ramifié, ayant de 1 à 18 atomes de carbone, un radical cycloalkyle ayant de 3 à 7 atomes de carbone, un radical phényle, un radical benzyle éventuellement substitué par un ou deux atomes d'halogène ou un radical hétéroaryle;
- R⁶ est un radical alkyle, ramifié ou non ramifié, ayant de 8 à 18 atomes de carbone;
- n représente un nombre entier de 1 à 6,
et qui contient en tant que composant consistant en un sel métallique (M) au moins un sel d'un métal divalent à pentavalent.

2. Composition selon la revendication 1, **caractérisée en ce qu'**elle contient en tant que solvant (L) de l'eau et en tant que composant organique (K) un composé de formule générale (1), dont les substituants, indépendamment les uns des autres, ont les significations suivantes:
- R¹ est un radical alkyle ayant de 1 à 6 atomes de carbone, ce radical alkyle pouvant être substitué par un groupe H-[(CH₂)ₘ-O]_{q}, dans lequel m peut être un nombre entier de 1 à 3 et q est un nombre entier de 1 à 4;
- R² est un radical alkyle ayant de 1 à 6 atomes de carbone, ce radical alkyle pouvant être substitué par un groupe H-[(CH₂)ₘ-O]_{q}, dans lequel m peut être un nombre entier de 1 à 3 et q est un nombre entier de 1 à 4;
- R³ est un radical alkyle ayant de 1 à 6 atomes de carbone, ce radical alkyle pouvant être substitué par un groupe H-[(CH₂)ₘ-O]_{q}, dans lequel m peut être un nombre entier de 1 à 3 et q est un nombre entier de 1 à 4;
- R⁴ est un radical alkyle ayant 1 à 18 atomes de carbone, un radical cycloalkyle ayant de 3 à 7 atomes de carbone, un radical phényle, un radical benzyle éventuellement substitué par un ou deux atomes d'halogène, un radical pyridine, un radical pyrimidine, un radical pyrazine, un radical pyridazine, un radical pyrrole ou un radical imidazole;
- R⁵ est un radical alkyle ayant 1 à 18 atomes de carbone, un radical cycloalkyle ayant de 3 à 7 atomes de carbone, un radical phényle, un radical benzyle, un radical pyridine, un radical pyrimidine, un radical pyrazine, un radical pyridazine, un radical pyrrole ou un radical imidazole ;
- R⁶ est un radical alkyle ayant 8 à 18 atomes de carbone;
- et n représente un nombre entier de 1 à 4.

3. Composition selon l'une quelconque des revendications 1 ou 2, **caractérisée en ce qu'**elle contient en tant que composant organique (K) un dérivé d'ammonium quaternaire de formule générale (I), dont les substituants, indépendamment les uns des autres, ont les significations suivantes:
- R¹, R², R³ représentent chacun un radical alkyle ayant de 1 à 6 atomes de carbone, ce radical alkyle pouvant être substitué par un groupe H-[(CH₂)ₘ-O]_{q}, dans lequel m peut être un nombre entier de 1 à 3 et q est un nombre entier de 1 à 4;
- R⁴ est un radical alkyle ayant de 1 à 18 atomes de carbone, un radical phényle ou un radical benzyle ;
- R⁵ est un radical alkyle ayant 1 à 18 atomes de carbone;
- R⁶ est un radical alkyle ayant 8 à 18 atomes de carbone;
et n représente un nombre entier de 2 à 4.

4. Composition selon l'une quelconque des revendications 1 à 3, **caractérisée en ce qu'**elle contient en tant que composant organique (K) un dérivé d'ammonium quaternaire de formule générale (I), dans laquelle:
- R¹, R² et R³ sont identiques et représentent un radical alkyle ramifié ou non ramifié ayant de 1 à 4 atomes de carbone,
- n est un nombre entier de 1 à 4,
- R⁴ est un groupe méthyle,
- R⁵ est un radical alkyle ayant 1 à 12 atomes de carbone, et
- R⁶ un radical alkyle ayant 8 à 18 atomes de carbone.

5. Composition selon l'une quelconque des revendications 1 à 4, **caractérisée en ce qu'**elle contient comme composant consistant en un sel métallique (M) au moins un sel d'un métal divalent, trivalent ou tétravalent.

6. Composition selon l'une quelconque des revendications 1 à 5, **caractérisée en ce qu'**elle contient comme composant consistant en un sel métallique (M) au moins un sel d'un métal divalent, trivalent ou tétravalent choisi dans le groupe formé par Mg, Ca, Ba, Zn, Sn, Al, Ga, Fe et Ti.

7. Composition selon l'une quelconque des revendications 1 à 6, **caractérisée en ce qu'**elle contient comme composant consistant en un sel métallique (M) un sel d'un métal divalent choisi parmi Mg, Ca, Ba, Zn, et/ou un sel d'un métal trivalent du groupe de métaux formé par Al et Fe.

8. Composition selon l'une quelconque des revendications 1 à 7, **caractérisée en ce qu'**elle comprend en tant que composant organique (K) de formule générale (I) un sel d'ammonium de diméthyl-tétradécyl-[3-(triméthoxysilyl)-propyl] ou un sel d'ammonium de diméthyl-octadécyl-[3-(triméthoxysilyl)-propyl] et en tant que composant consistant en un sel métallique (M) un sel d'un métal divalent choisi parmi Mg, Ca, Zn, Ba et/ou un sel d'un métal trivalent du groupe formé par Al et Fe.

9. Composition selon l'une quelconque des revendications 1 à 8, **caractérisée en ce qu'**elle consiste en une solution aqueuse contenant 0,01 à 10% en poids, de préférence 0,1 à 3% en poids du composant organique (K) et 0,01 à 10% en poids, en particulier 0,05 à 2% en poids de composant consistant en un sel métallique (M) et 0 à 50% en poids, en particulier 1 à 10% en poids d'un solvant organique.

10. Composition selon l'une quelconque des revendications 1 à 9, **caractérisée en ce qu'**elle contient de 0,3 à 2,5% en poids du composant organique (K) et de 0,2 à 2,0% en poids du composant consistant en un sel métallique (M), de 70 à 99,5% en poids de solvant consistant en eau et de 0,1 à 30% en poids d'adjuvants.

11. Composition selon l'une quelconque des revendications 1 à 10, **caractérisée en ce qu'**elle contient comme solvant de l'eau et éventuellement un alcool, ainsi que en tant qu'adjuvant, un ou plusieurs des adjuvants suivants: agent tampon du pH, agents plastifiants, agents hydrophobes, agents oléophobes, liants, agents de réticulation, agents ignifuges, colorants textiles, produits répulsifs et agents pour empêcher la formation de taches.

12. Utilisation d'une composition selon l'une quelconque des revendications 1 à 11, pour le traitement antimicrobien et/ou antiviral de textiles, de fibres et de fils.

13. Utilisation d'une composition selon la revendication 12, pour le traitement de textiles, de fibres et de fils qui comprennent des matières synthétiques ou qui sont constitués de matières synthétiques.

14. Utilisation selon la revendication 12 ou 13, pour le traitement de textiles, de fibres et de fils contenant polyamide et/ou polyester.

15. Utilisation selon l'une quelconque des revendications 12 à 14 pour le traitement de textiles, de fibres et de fils par des procédés de foulardage, d'application de mousse, de pulvérisation, de revêtement ou d'extraction.

16. Textiles, fibres et fils traités par une composition antimicrobienne et/ou antivirale selon l'une quelconque des revendications 1 à 11.

17. Textiles, fibres et fils traités par une composition antimicrobienne selon l'une quelconque des revendications 1 à 11.

18. Procédé pour le traitement antimicrobien et/ou antiviral de textiles, de fibres et de fils, dans lequel au moins un composant antimicrobien organique (K) de formule générale (I) selon la revendication 1 et au moins un composant consistant en un sel métallique (M) selon la revendication 1 et éventuellement un solvant (L) et éventuellement d'autres adjuvants simultanément ou séquentiellement appliqués sur des textiles, fibres ou fils.
